# EUROPEAN PATENT SPECIFICATION

(11) **EP 1 645 706 B1**
(45) Date of publication and mention of the grant of the patent: **30.06.2010**
(21) Application number: 05468014.5
(22) Date of filing: 28.09.2005
(51) Int. Cl.: E05C 19/06, E05B 47/00, F16P 3/08, D06F 39/14

(54) **Safety lock of a door of household appliances**
Sicherheitsschloss für eine Tür eines Haushaltsgerätes
Verrouillage de sécurité pour une porte d'appareil ménager

(30) Priority: 06.10.2004 SI 200400276 P
(43) Date of publication of application: 12.04.2006
(73) Proprietor: ITW Metalflex d.o.o. Tolmin, 5220 Tolmin (SI)
(72) Inventor: Lavrencic, Joze, 5222 Kobarid (SI)
(74) Representative: Primozic, Alenka

(56) References cited:
- EP-A- 1 137 030
- EP-A- 1 340 870
- DE-A1- 19 747 707
- DE-U1- 9 412 661
- GB-A- 2 128 283

## Description

### Subject of Invention

The subject of the present invention is a safety lock of a door of household appliances, preferably washing machines and is conceived as a door lock that will not only lock the door but also automatically prevent a manual opening of the door during operation or allow it only when the appliance is electrically switched off.

Document EP 1550759 A2 describes a lock for a household appliance door and in part of the state of the art according to Art. 54(3) EPC.

### Technical Problem

The technical problem solved by the present invention is how to conceive such lock of a door of household appliances that will always allow the possibility of a repeated opening of the door only with the appliance switched off, said lock being produced in batch production under the consideration of manufacturing tolerances and of an expected price acceptable on the market, whereat the lock will prevent the appliance from being switched on with the door seemingly closed and will at the same time comply with various security standards and regulations of different countries.

With the door of household appliances, especially washing machines, left open, there is a great risk of damage upon improper closing of the door and subsequent switching on of the appliance. For instance, if the door of a washing machine is not properly closed and the machine is switched on, a harmful spill of the washing liquid occurs. At the same time, the lock should allow the opening of the door of an appliance only with the appliance switched off.

### Prior art

Known locks of a door of household appliances are combined with various sensors for detection of a seemingly closed door and for prevention of a switch-on of the device in such circumstance. Such locks also have safety elements to prevent the opening of the door with the device switched on.

All these embodiments are conceived in various ways to meet the corresponding standards and regulations, which are different from one country to another.

The manufacturers are therefore forced to manufacture various locks of this type, which contributes to a higher price and burdens the logistics of warehouses and transport due to small quantities of individual embodiments.

### Solution to the Technical Problem

The described technical problem is solved by the new lock of the invention combining a mechanical lock of a household appliance door and an electric safety lock connected to the mechanical lock of the door in such a way that with the door seemingly closed the appliance cannot be switched on nor is it possible to open the door with the appliance switched on.

This is functionally conceived as follows: with the door closed or open i.e. when the door latch bolt is in the seat of the lock or outside it, the latch bolt automatically moves a slotted link in the electric lock via a lever so that a closed electric circuit is established and a programming unit intended to detect whether the door is open or closed is turned on. The electric lock simultaneously, via the same slotted link and lever, influences the seat of the latch bolt so that it is not possible to open the door with the appliance switched on.

In order for the present invention to be more readily understood, an embodiment thereof will now be described by way of example with reference to the accompanying drawing in which:

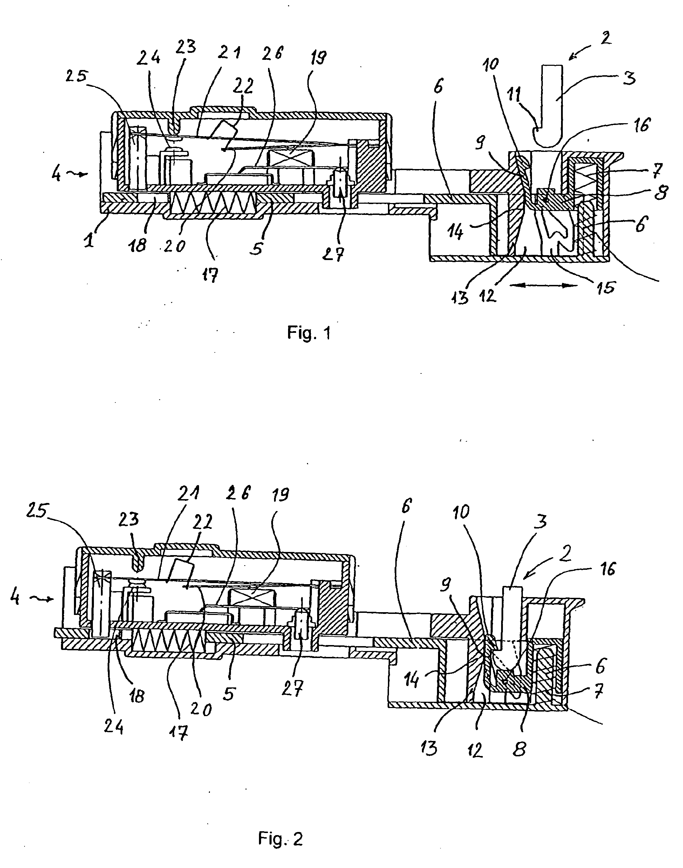

- Fig. 1: shows a longitudinal section of the safety lock of the invention with the door open;
- Fig. 2: shows a longitudinal section of the safety lock of the invention with the door closed.

A safety lock of a household appliance door, preferably of a washing machine, consists of a basic board **1,** at one end of which there is a mechanical door lock assembly **2,** of which only a latch bolt **3** is shown in the drawings, and at the other end there is an electric switch assembly **4** for achieving a closed or an interrupted electric circuit including also a part of a programming unit, which is no subject of the invention and is also not shown in the drawings, whereas the door lock assembly **2** and the electric switch assembly **4** are mutually connected by a lever **5.**

The door lock assembly **2** is designed in such a way that on the basic board **1** there is provided a guide **6,** preferably in the form of a pin, with a spring **7,** preferably a screw one positioned on it. On the guide 6 there is positioned a snap element **8** of the latch bolt **3** of the door not shown in the drawings.

The snap element **8** contains at least one lateral flexible wall **9** with a tooth **10** to couple with a tooth **11** of the latch bolt **3.** The snap element **8** is simultaneously guided in an opening **12** within a housing **13,** whereas the flexible wall **9** of the element **8** is arranged above or outside the area of a protrusion **14** on one wall of the housing **13.** Within the housing **13** there is a slotted link **15** coupled with the snap element **8** via a pin **16.** The slotted link **15** is simultaneously connected with the lever **5** supported on a spring **17** in order to lean against the guide **6.** On its part in the area of the assembly **4** the lever **5** contains an opening **18.**

On the basic board **1** above the lever **5** there is the electric switch assembly **4.** The assembly **4** consists of an electric resistor **19,** a temperature sensitive spring **20,** a control spring **21** positioned above it, a linking element **22** connecting the springs **20** and **21,** a support **23** of the spring **21,** a contact **24** closed by the spring **21** and included into the electric circuit indicating the closing of the door of the appliance, and a rest **25,** in which the free end of the spring **21** is arranged. The rest **25** is arranged within the assembly **4** in a way that it is near the opening **18** on the lever **5.** The resistor **19** is arranged on a support **26** by an adjusting screw **27,** which is no longer an object of this invention.

The safety lock of the invention functions as follows: when the door is open, i.e. when the latch bolt **3** of the door is not in the snap element **8,** the lever **5** is closest to the guide **6** due to the action of the spring **17.** The position of the opening **18** is outside the axis of the rest **25,** which is therefore in its upper position i.e. leaned against the support **23.** The contact provided by the spring **21** and the contact **24** is therefore interrupted and thus the open door of the appliance is indicated in the programming unit.

The snap element **8** is also positioned in its upper position i.e. closest to the latch bolt **3** due to the activity of the spring 7 on the guide **6.** In this position of the element **8** its flexible wall **9** is slanted because it is leaned outside the area of the protrusion **14** and the snap element **8** is therefore prepared to receive the latch bolt **3** when closing the door of the appliance. The pin **16** is positioned in one end point of the slotted link **15.**

When closing the door of the appliance the latch bolt **3** is pushed into the snap element **8,** whereat the closing of the door starts shifting it in the opening **12** towards the opposite end as allowed by the guide **6.** Since the element **8** is linked to the slotted link **15** via the pin **16,** said link being connected with the guide **6,** the element **8** shifts the link towards the assembly **4.**

By moving the latch bolt **3** in the snap element **8** to final position, when the door of the appliance is closed, the snap element **8** is in such a position that its flexible wall **9** leans against the protrusion **14,** due to which the tooth **11** of the latch bolt **3** and the corresponding tooth **10** on the wall **9** of the element **8** come into a snap grip. The door of the appliance is thus closed and snapped and it cannot open without a manual intervention for opening the door.

As mentioned above, when the door of the appliance is closed, the guide **6** moves towards the assembly **4,** so that the axis of the support **25** overlaps with the centre of the opening **18.** The support **25** now moves into the opening **18** due to the force of the spring **21.** The axial movement of the lever **5** is thus fixed due to the force of the spring **17** towards the guide **6,** if a user should want to open the door without first switching off the appliance.

In the moment of the closed switch formed by the control spring **21** and the contact **24,** the current flows through the circuit that also includes the resistor **19,** said resistor thus heating the temperature sensitive spring **20,** which bends and holds the control spring **21** via the linking element **22** against the contact **24** and the support **25** in the opening **18,** thus preventing the axial movement of the lever **5.**

When a user switches off the electric appliance, the electric supply of the circuit is also interrupted, said circuit including the electric switch assembly **4.** The resistor **19** stops heating the spring **20,** which therefore resumes its previous position. Via the linking element **22** the spring **21** pushes the support **25** outside the hole **18** in the lever **5,** which is thus released and ready for the spring **17** to push it towards the guide **6.** This begins with a user opening the door by moving the latch bolt **3** together with the snap element **8** outside the opening **12** in the housing **13.** The flexible wall **9** thus shifts outside the opening **14** and moves away. The tooth **11** of the latch bolt **3** and the tooth **10** of the flexible wall 9 open, thus releasing the latch bolt **3,** which entirely moves out of the snap element **8** thus allowing the door of the appliance to open.

If a user tries to electrically switch on the appliance with the door open or only apparently closed, the circuit that also includes the electric switch assembly **4** is open. Therefore the appliance cannot be connected to a source of electricity. Once the door is properly closed, the electric switch-on of the appliance is possible.

This concept solves the mentioned technical problem under consideration of all security requirements of the operation of an appliance.

It is understandable that someone skilled in the art can design other embodiments based on the above description without circumventing the characteristics of the invention defined in the attached patent claims.

## Claims

1. A safety lock for a household appliance door, preferably of washing machines, consisting of a basic board (**1**), at one end of which there is a mechanical door lock assembly (**2**) with a latch bolt (**3**), and at the other end there is an electric switch assembly (**4**) for achieving a closed or interrupted electric circuit including also a part of a programming unit, whereas the assembly (**4**) consists of an electric resistor (**19**), a temperature sensitive spring (**20**), a control spring (**21**) provided above it, a linking element (**22**) connecting the springs (**20**) and (**21**), a support (25) of the control spring (**21**), a contact (**24**), and a support (**26**) of the resistor (**19**) with an adjusting screw (**27**), wherein the door lock assembly (**2**) and the electric switch assembly (**4**) are mutually connected by a lever (**5**) and the door lock assembly (**2**) is provided with a guide (**6**) on the basic board (**1**), on which guide (**6**) there is guided a snap element (**8**) of the latch bolt (**3**), said element (**8**) containing at least one lateral flexible wall (**9**) with a tooth (**10**) to couple with a tooth (**11**) of the latch bolt (**3**), and said element (**8**) being simultaneously guided in an opening (**12**) within the housing (**13**), whereas the flexible wall (**9**) of the snap element (**8**) is arranged above or outside the area of the protrusion (**14**) on one wall of the housing (**13**), within which there is a slotted link (**15**) coupled with the snap element (**8**) via a pin (**16**) and also connected with the lever (**5**) supported on a spring (**17**) in order to lean against the guide (**6**), whereas the lever (**5**) contains on its part within the area of the assembly (**4**) an opening (18) to receive the support (**25**) of the control spring (**21**).

2. A safety lock according to claim 1, **characterized in that** the guide (**6**) is preferably in the form of a pin with a spring (**7**), preferably a screw one positioned on it.

3. A safety lock according to claim 2, **characterized in that**, in the mounted condition of the safety lock, with the door open i.e. when the latch bolt (**3**) of the door is not in the snap element (**8**), the lever (**5**) is closest to the guide (**6**) due to the action of the spring (**17**) and the position of the opening (**18**) is outside the axis of the support (25) of the control spring (21) (**25**) positioned in its upper position, i.e. leaned against a support (**23**), whereas the snap element (**8**) is positioned in its upper position, i.e. closest to the latch bolt (**3**) due to the activity of the spring (**7**) on the guide (**6**) and the flexible wall (**9**) is slanted and thus the snap element (**8**) is prepared to receive the latch bolt (**3**) when closing the door of the appliance.

4. A safety lock according to claims 1 to 3, **characterized in that**, in the mounted condition of the safety lock, with the door closed the latch bolt (**3**) is pushed into the snap element (**8**) shifted in the opening (**12**) towards the opposite end as allowed by the guide (**6**) and, simultaneously with the shifting of the element (**8**), due to the connection of said element (**8**) via the pin (**16**) with the slotted link (**15**) linked to the guide (**6**), said guide is shifted towards the assembly (**4**) so that the support (**25**) of the control spring (21) is moved into the opening (**18**) due to the force of the spring (**21**), due to which a snap grip is achieved between the tooth (**11**) of the latch bolt (**3**) and the corresponding tooth (**10**) on the wall (**9**) of the element (**8**) and the circuit formed by the spring (**21**) and the contact (**24**) is closed.

## Patentansprüche

1. Sicherheitsschloss für eine Tür eines Haushaltsgeräts, vorzugsweise von Waschmaschinen, das aus einer Grundplatte (1) besteht, an deren einem Ende eine mechanische Türschlossanordnung (2) mit einer Falle (3) vorliegt und an deren anderem Ende eine elektrische Schalteranordnung (4) zur Erzielung eines geschlossenen oder unterbrochenen elektrischen Schaltkreises sowie ein Teil einer Programmierungseinheit vorliegt, während die Anordnung (4) aus einem elektrischen Widerstand (19), einer temperaturempfindlichen Feder (20), einer darüber vorgesehenen Steuerfeder (21), einem Verbindungselement (22), das die Federn (20) und (21) verbindet, einer Stütze (25) der Steuerfeder (21), einem Kontakt (24) und einer Stütze (26) des Widerstands (19) mit einer Stellschraube (27) besteht, wobei die Türschlossanordnung (2) und die elektrische Schalteranordnung (4) über einen Hebel (5) miteinander verbunden sind und die Türsctilossanordnung (2) mit einer Führung (6) an der Grundplatte (1) versehen ist, wobei an der Führurg (6) ein Einschnappelement (8) der Falle (3) geführt ist, wobei das Element (8) mindestens eine flexible Seitenwand (9) mit einem Zahn (10) zur Hoppelung mit einem Zahn (11) der Falle (3) enthält und gleichzeitig in einer Öffnung (12) im Gehäuse (13) geführt wird, während die flexible Wand (9) des Einschnappelements (8) oberhalb oder außerhalb des Bereichs des Vorsprungs (14) an einer Wand des Gehäuses (13) angeordnet ist, in der sich ein geschlitztes Glied (15) befindet, das über einen Stift (16) an das Einschnappelement (8) gekoppelt ist und auch mit dem Hebel (5) verbunden ist, der auf einer Feder (17) gestützt ist, um an der Fünrung (6) zu ruhen, während der Hebel (5) seinerseits im Bereich der Anordnung (4) eine Cffnung (18) zur Ausnahme der Stütze (25) der Steuerfeder (21) enthält.

2. Sicherheitsschloss nach Anspruch 1, **dadurch gekennzeichnet, dass** die Führung (6) vorzugsweise die Form eines Stifts mit einer Feder (7) hat, vorzugweise einer darauf positionierten Schraubenfeder.

3. Sicherheitsschloss nach Anspruch 2, **dadurch gekennzeichnet, dass** der Hebel (5) im montierten Zustand des Sicherheitsschlosses bei offener Tür, d. h. wenn die Falle (3) der Tür nicht in Einschnappelement (8) ist, aufgrund der Wirkung der Feder (17) der Führung (6) am nächsten liegt, und die Position der Öffnung (18) außerhalb der Achse der Stütze (25) der Steuerfeder (21) ist, die in ihrer oberen Position positioniert ist, d. h. an einer Stütze (23) anliegt, während das Einschnappelement (8) in seiner oberen Position positioniert ist, d. h. aufgrund der Wirkung der Feder (7) auf die Führung (6) der Falle (3) am nächsten liegt, und die flexible Wand (9) geneigt ist, so dass das Einschnappelement (8) bereit ist, die Falle (3) aufzunehmen, wenn die Tür des Geräts geschlossen wird.

4. Sicherheitsschloss nach Ansprüchen 1 bis 3, **dadurch gekennzeichnet, dass** die Falle (3) im montierten Zustand des Sicherheitsschlosses und bei geschlossener Tür in das Einschnappelement (8) geschoben ist, das in der Öffnung (12) zum gegenüberliegenden Ende geschoben ist, wie durch die Führung (6) gestattet, und gleichzeitig mit dem Schieben des Elements (8) wird die Führung aufgrund der Verbindung des Elements (8) über den Stift (16) mit dem geschlitzten Glied (15), das mit der Führung (6) verbunden ist, zur Anordnung (4) geschoben, so dass die Stütze (25) der Eteuerfeder (21) aufgrund der Kraft der Feder (21) in die Öffnung (18) bewegt wird, wodurch ein Einschnappen zwischen dem Zahn (11) der Falle (3) und dem entsprechenden Zahn (10) an der Wand (9) des Elements (8) erzielt wird und der durch die Feder (21) und den Kontakt (24) gebildete Schaltkreis geschlossen wird.

## Revendications

1. Verrouillage de sécurité pour une porte d'appareil ménager, de préférence des machines à laver, constitué d'un panneau de base (1) à une extrémité duquel est disposé un ensemble de verrouillage de porte mécanique (2) avec un verrou (3), et à l'autre extrémité duquel est disposé un ensemble de commutateur électrique (4) destiné à réaliser un circuit électrique fermé ou interrompu comportant aussi une partie d'une unité de programmation, l'ensemble (4) étant constitué d'une résistance électrique (19), d'un ressort sensible à la température (20), un ressort de commande (21) prévu au-dessus de lui, d'un élément de liaison (22) reliant les ressorts (20) et (21), d'un support (25) du ressort de commande (21), d'un contact (24), et d'un support (26) de la résistance (19) avec une vis d'ajustage (27), l'ensemble de verrouillage de porte (2) et l'ensemble de commutateur électrique (4) étant connectés l'un à l'autre par un levier (5) et l'ensemble de verrouillage de porte (2) étant pourvu d'un guide (6) sur le panneau de base (1), sur lequel guide (6) est guidé un élément d'encliquetage (8) du verrou (3), ledit élément (8) contenant au moins une paroi flexible latérale (9) avec une dent (10) devant s'accoupler avec une dent (11) du verrou (3), et ledit élément (8) étant guidé simultanément dans une ouverture (12) dans le boîtier (13), la paroi flexible (9) de l'élément d'encliquetage (8) étant arrangée au-dessus ou en dehors de la zone de la saillie (14) sur une paroi du boîtier (13), dans laquelle est prévue une liaison fendue (15) coupée à l'élément d'encliquetage (8) par le biais d'une goupille (16) et également connectée au levier (5) supporté sur un ressort (17) afin de presser contre le guide (6), le levier (5) contenant pour sa part dans la zone de l'ensemble (4) une ouverture (18) pour recevoir le support (25) du ressort de commande (21).

2. Verrouillage de sécurité selon la revendication 1, **caractérise en ce que** le guide (6) est de préférence en forme de goupille avec un ressort (7), de préférence vissable, positionné sur elle.

3. Verrouillage de sécurité selon la revendication 2, **caractérisé en ce que**, dans l'état monté du verrouillage de sécurité, avec la porte ouverte, c'est-à-dire lorsque le verrou (3) de la porte n'est pas dans l'élément d'encliquetage (8), le levier (5) est le plus près du guide (6) en raison de l'action du ressort (17) et la position de l'ouverture (18) est en dehors de l'axe du support (25) du ressort de commande (21) positionné dans sa position supérieure, c'est-à-dire pressant contre un support (23), l'élément d'encliquetage (8) étant positionné dans sa position supérieure, c'est-à-dire le plus près du verrou 3) en raison de l'action du ressort (7) sur le guide (6) et la paroi flexible (9) étant inclinée et donc l'élément d'encliquetage (8) étant prêt à recevoir le verrou (3) lorsque la porte de l'appareil est fermée.

4. Verrouillage de sécurité selon l'une quelconque des revendications 1 à 3, **caractérisé en ce que**, dans l'état monté du verrouillage de sécurité, avec la porte fermée, le verrou (3) est poussé dans l'élément d'encliquetage (8) décalé dans l'ouverture (12) vers l'extrémité ouverte comme permis par le guide (6), et simultanément au décalage de l'élément (8), en raison de la connexion dudit élément (8) par le biais de la goupille (16) à la liaison fendue (15) reliée au guide (6), ledit guide est décalé vers l'ensemble (4) de sorte que le support (25) du ressort de commande (21) est déplacé dans l'ouverture (18) en raison de la force du ressort (21), ce qui permet d'obtenir un engagement par encliquetage entre la dent (11) du verrou (3) et la dent correspondante (10) sur la paroi (9) de l'Élément (8) et le circuit formé par le ressort (21) et le contact (24) est fermé.
